# EUROPEAN PATENT SPECIFICATION

(11) **EP 1 703 049 B1**
(45) Date of publication and mention of the grant of the patent: **16.06.2010**
(21) Application number: 06101340.5
(22) Date of filing: 06.02.2006
(51) Int. Cl.: E05B 65/36

(54) **Control method and device for activating and deactivating the child safety lock function of vehicle doors**
Steuerungsverfahren und Anordnung zur Ein- und Ausschaltung der Kindersicherungsfunktion an Fahrzeugtüren
Procédé de controle et dispositif pour activer et désactiver la fonction sécurité enfants sur portes de véhicule

(30) Priority: 16.02.2005 US 653460 P
(43) Date of publication of application: 20.09.2006
(73) Proprietor: INTIER AUTOMOTIVE CLOSURES S.p.A, 10098 Rivoli (IT)
(72) Inventor: Taurasi, Marco, 57100 Livorno (IT)
(74) Representative: D'Angelo, Fabio

(56) References cited:
- EP-A- 0 099 820
- EP-A- 1 541 790
- DE-A1- 10 259 972
- DE-A1- 19 652 717
- DE-A1- 19 705 418
- US-A- 6 157 090

## Description

The present invention relates to a control method and device for activating and deactivating the child safety lock function of vehicle doors.

As is known, in motor vehicles, rear doors are frequently equipped with safety lock devices to prevent the doors being opened accidentally by operating the inside door handles when the vehicle is moving.

Known safety lock devices may be mechanical or electrical and, in the latest embodiments, can be activated and/or deactivated manually by means of a control button usually located on the dashboard.

When the button is pressed, the safety lock device is activated to lock the rear doors, which, since the inside handles are deactivated, can then only be opened using the outside handles.

To open the doors from inside the vehicle, the control button must be pressed again to deactivate the safety lock device.

Given the above operating principle, use of and, consequently, the degree of safety of children transported in vehicles equipped with known safety lock devices therefore depend entirely on the driver or one of the passengers, who, when necessary, must always activate and/or deactivate the safety lock device manually using the control button.

The effectiveness of a safety lock device of this type therefore depends on the attentiveness of the driver/passenger of the vehicle, who may possibly neglect to activate/reactivate it, e.g. in the event the safety lock device has been deactivated to allow a passenger to open a rear door.

DE-A-10259972 discloses a control method and device as defined in the preambles of claims 1 and 3, respectively.

It is an object of the present invention to provide a control method and device for activating and deactivating the child safety lock function of vehicle doors, designed to improve the degree of safety afforded by known devices.

According to the present invention, there are provided a control method and device for activating and deactivating the child safety lock function of vehicle doors, as claimed in Claims 1 and 5 respectively.

A preferred, non-limiting embodiment of the present invention will be described by way of example with reference to the accompanying drawings, in which:
Figure 1 shows a vehicle featuring a child safety lock function control device in accordance with the present invention;
Figure 2 shows steps in the method according to the present invention.

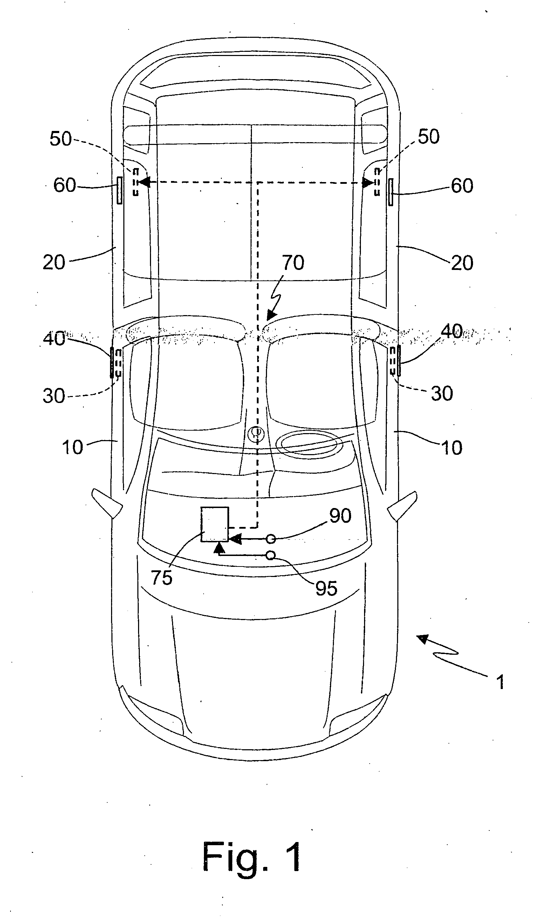

Number 1 in Figure 1 indicates as a whole a vehicle comprising, among other things:
- two front doors 10;
- two rear doors 20;
- two front inside door handles 30 (shown schematically) for opening respective front doors 10 from inside the vehicle;
- two front outside door handles 40 for opening respective front doors 10 from outside the vehicle;
- two rear inside door handles 50 (shown schematically), each for opening a respective rear door 20 from inside the vehicle; and
- two rear outside door handles 60, each for opening a respective rear door 20 from outside the vehicle.

A control device 70 is also provided to activate and deactivate the child safety lock function of rear doors 20, and wherein an electronic central control unit 75 controls a known safety lock device (not shown) connected to inside handles 50, and which provides for two operating modes:
- a normal operating mode, in which the safety lock device is set to a first operating position, and rear doors 20 can be opened using both inside handles 50 and outside handles 60; and
- a safety lock mode, in which the safety lock device is set to a second operating position, and rear doors 20 can only be opened using outside handles 60 - any attempt to open rear doors 20 using respective inside handles 50 has no effect.

Normal operating mode or safety lock mode is selected by manually operating a selector device 90 (e.g. a button) connected to central control unit 75.

An important aspect of the present invention is the provision of a temporary consent device, which can be activated manually (e.g. by means of a button 95) to temporarily deactivate safety lock mode, if this has been selected.

The temporary consent device is ineffective in normal operating mode.

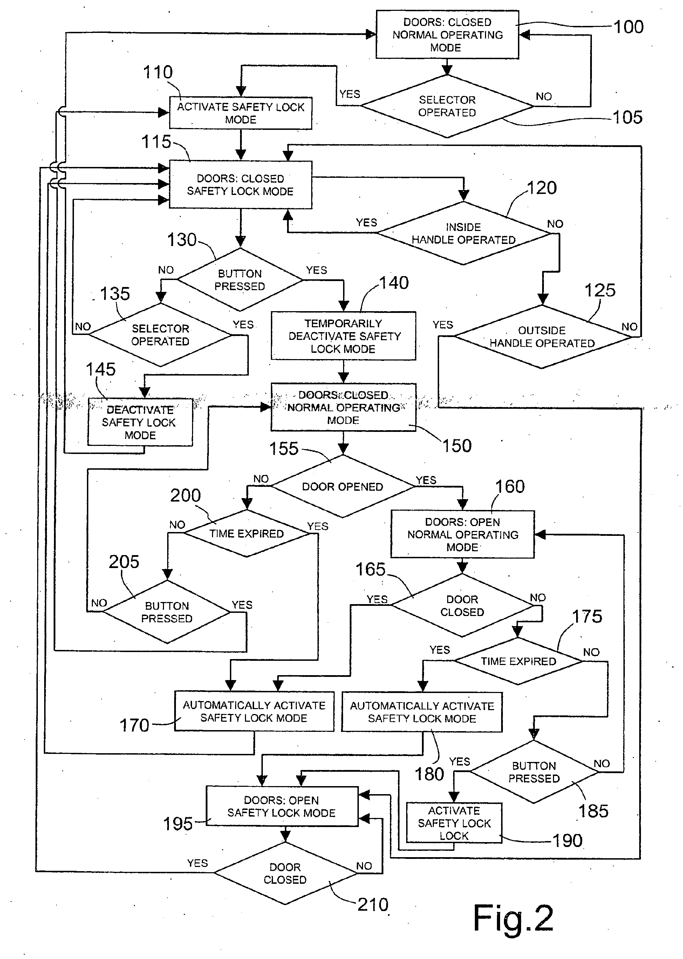

The Figure 2 flow chart shows operation of control device 70.

As stated, control device 70 only acts on rear doors 20 of vehicle 1, which means the front doors 10 of vehicle 1 can always be opened using front inside handles 30, regardless of which mode is selected.

As shown in Figure 2, description of the method commences with rear doors 20 of vehicle 1 closed, and normal operating mode effective (block 100).

In normal operating mode, rear doors 20 can be opened using both respective outside handles 60 and respective inside handles 50. Operation of any one of inside/outside handles 50/60 opens relative rear door 20.

Block 100 is followed by a block 105, which determines whether selector device 90 has been operated; if it has not (NO output), block 105 goes back to block 100; conversely, block 105 goes on to a block 110.

If none of handles 50, 60 is operated, and selector device 90 is not set to safety lock mode (NO output of block 105), the initial conditions in block 100 are unchanged.

Conversely, if selector device 90 is set to safety lock mode (YES output of block 105), central control unit 75 activates the safety lock device (block 110) to set rear doors 20 to a lock position and prevent them being opened from inside vehicle 1.

By the end of this process (block 115), rear doors 20 are firmly locked.

In safety lock mode, rear doors 20 of vehicle 1 are locked from the inside and cannot be opened using relative inside handles 50 (YES output of block 120 following block 115); in which case, the condition in block 115 is unchanged. If, however, instead of using an inside handle 50 (NO output of block 120), an outside handle 60 is used (YES output of block 125), rear doors 20 open, and a condition is established (block 195) in which safety lock mode is still operative, but rear doors 20 are open.

Conversely, if no outside handle 60 is operated (NO output of block 125), rear doors 20 remain closed, and safety lock mode is operative (block 115).

Block 115 is followed by a block 130, which determines whether temporary consent button 95 has been pressed; if it has not (NO output of block 130), block 130 goes on to a block 135; conversely (YES output), block 130 goes on to a block 140. Block 135 determines whether selector device 90 has been operated to switch from safety lock mode back to normal operating mode; if it has not (NO output of block 135), block 135 is followed by block 115, which maintains the current mode; conversely, block 135 is followed by a block 145, which resets normal operating mode, so that rear doors 20 can be opened using both inside handles 50 and outside handles 60.

Block 140 advantageously provides for temporarily resetting normal operating mode, so that rear doors 20 can be opened using relative inside handles 50 (block 150 following block 140).

Block 150 is followed by a block 155, which determines whether rear doors 20 have been opened using inside/outside handles 50/60; if handles 50, 60 have been operated (YES output of block 155), block 155 goes on to a block 160, in which rear doors 20 are open, and normal operating mode is temporarily operative.

Block 160 is followed by a block 165, which determines whether at least one rear door 20 has been closed; if it has (YES output of block 165), block 165 goes on to a block 170, which resets safety lock mode. In this way, the user can temporarily deactivate the safety lock device using button 95, rear doors 20 can be opened from the inside, but the safety lock device is automatically activated when the doors are closed.

If inside handles 50 are not used (NO output of block 155), block 155 is followed by a block 200, which determines whether a predetermined time Tmax has elapsed since entering block 140; if it has not (time elapsed < Tmax), block 200 is followed by a block 205, which determines whether button 95 has been pressed again. If it has, block 205 is followed by block 110, which activates the safety lock device; conversely, block 205 goes back to block 150. In other words, the first time button 95 is pressed deactivates safety lock mode, which is reactivated when button 95 is pressed again.

On determining the maximum time has elapsed, block 200 is followed by block 170, which resets safety lock mode.

If block 165 fails to determine closure of at least one of rear doors 20 (NO output of block 165), block 165 is followed by a block 175 (similar to block 200) which determines whether a predetermined time Tmax has elapsed since entering block 140; if it has (elapsed time = Tmax), block 175 goes on to a block 180, which reactivates the safety lock device and is followed by block 195. In other words, when the predetermined time interval expires, the safety lock device is reactivated even if one or all of rear doors 20 are open.

If the time determined in block 175 is less than the predetermined maximum time Tmax, block 175 is followed by a block 185 (similar to block 205) which determines whether button 95 has been pressed; if it has, block 185 is followed by a block 190, which resets safety lock mode and is followed by block 195. On determining button 95 has not been pressed, block 185 is followed by block 160. Block 195 is followed by a block 210, which determines whether rear doors 20 have been closed. If they have (YES output), the block 115 mode is reset; conversely (NO output of block 210), block 210 goes back to block 195.

## Claims

1. A method of activating and deactivating the child safety lock function of vehicle doors (20), comprising the step of determining a user command (90) to select a normal operating mode or a safety lock mode;
- in normal operating mode, a safety lock device being set to a first operating position allowing said doors (20) to be opened using both inside handles (50) and outside handles (60), and
- in safety lock mode, said safety lock device being set to a second operating position, in which said doors (20) can only be opened using the outside handles (60);
the method further comprising the step of determining a further user command (95; 130; 185; 205) to perform a temporary consent step wherein the current safety lock mode is switched to normal operating mode.
wherein said temporary consent step comprises the step of determining the time lapse since the further user command, so as to terminate (175; 200) said temporary consent step upon expiry of a predetermined time (Tmax), the method being **characterized by** comprising step of determining, during said temporary consent a further user command to terminate (110; 190) said consent step in advance.

2. A method as claimed in Claim 1, and also comprising the steps of:
- determining (155) whether at least one door (20) is opened during said temporary consent step;
- determining (165) closure of said door (20); and
- terminating (170) said temporary consent step on determining said closure.

3. A control device (70) for activating and deactivating the child safety lock function of vehicle doors (20), said control device (70) comprising:
- a safety lock device connectable to respective inside handles (50) of said doors (20);
- a central control unit (75) for controlling said safety lock device and establishing:
a normal operating mode, in which said safety lock device is set to a first operating position allowing said doors (20) to be opened using both said inside handles (50) and relative outside handles (60); and
a safety lock mode, in which said safety lock device is set to a second operating position, in which said doors (20) cannot be opened using said inside handles (50);
- first selecting means (90) operated by a user to select normal operating mode and safety lock mode;
- a temporary consent device for temporarily deactivating said safety lock mode if previously selected;
- second selecting means (95) operated by a user to activate said temporary consent device for a predetermined time (Tmax);
and being **characterized by** also comprising:
- detecting means (185, 205) activatable during the step of temporarily deactivating the safety lock mode, and for determining further operation of said second selecting means (95), so as to command said central control unit (75) to terminate said step in advance (110; 190) of the predetermined time (Tmax).

4. A control device as claimed in Claim 3, and comprising sensor means (155, 165, 210) for determining whether at least one of said doors (20) is opened during the step of temporarily deactivating the safety lock mode; said sensor means (155, 165, 210) determining closure (165) of said door (20) to command said central control unit (75) to terminate (170) said step, upon determining said closure.

## Patentansprüche

1. VerfOahren zum Aktivieren und Deaktivieren der Kindersicherungs-Verriegelungsfunktion von Fahrzeugtüren (20), das den Schritt des Bestimmens eines Anwenderbefehls (90), um eine normale Betriebsart oder eine Sicherungsverriegelungsbetriebsart zu wählen, umfasst;
- wobei in der normalen Betriebsart eine Sicherungsverriegelungsvorrichtung in eine erste Betriebsposition versetzt wird, die zulässt, dass die Türen (20) unter Verwendung sowohl von Innengriffen (50) als auch von Außengriffen (60) geöffnet werden können,
- wobei in der Sicherungsbetriebsart die Sicherungsverriegelungsvorrichtung in eine zweite Betriebsposition versetzt wird, in der die Türen (20) nur unter Verwendung der Außengriffe (60) geöffnet werden können;
wobei das Verfahren ferner den Schritt des Bestimmens eines weiteren Anwenderbefehls (95; 130; 185; 205), um einen Schritt des vorübergehenden Zustimmens auszuführen, in dem die momentane Sicherungsverriegelungsbetriebsart in die normale Betriebsart geschaltet wird, umfasst,
wobei der Schritt des vorübergehenden Zustimmens den Schritt des Bestimmens der Zeit, die seit dem weiteren Anwenderbefehl verstrichen ist, umfasst, um den Schritt des vorübergehenden Zustimmens zu beenden (175; 200), wenn eine vorgegebene Zeit (Tmax) abgelaufen ist,
wobei das Verfahren **gekennzeichnet ist durch**
den Schritt des Bestimmens eines weiteren Anwenderbefehls während des Schrittes des vorübergehenden Zustimmens, um den Schritt des vorübergehenden Zustimmens vorzeitig zu beenden (110; 190).

2. Verfahren nach Anspruch 1, das außerdem die folgenden Schritte umfasst:
- Bestimmen (155), ob während des Schrittes des vorübergehenden Zustimmens wenigstens eine Tür (20) geöffnet wird;
- Bestimmen (150) eines Schließens der Tür (20); und
- Beenden (170) des Schrittes des vorübergehenden Zustimmens, wenn das Schließen bestimmt wird.

3. Steuervorrichtung (70) zum Aktivieren und Deaktivieren der Kindersicherungs-Verriegelungsfunktion von Fahrzeugtüren (20), wobei die Steuervorrichtung (70) umfasst:
- eine Sicherungsverriegelungsvorrichtung, die mit jeweiligen Innengriffen (50) der Türen (20) verbunden werden kann;
- eine zentrale Steuereinheit (75), um die Sicherungsverriegelungsvorrichtung zu steuern und um bereitzustellen:
eine normale Betriebsart, in der die Sicherungsverriegelungsvorrichtung in eine erste Betriebsposition versetzt ist, um zuzulassen, dass die Türen (20) unter Verwendung sowohl der Innengriffe (50) als auch entsprechender Außengriffe (60) geöffnet werden können; und
eine Sicherungsverriegelungsbetriebsart, in der die Sicherungsverriegelungsvorrichtung in eine zweite Betriebsposition versetzt ist, in der die Türen (20) unter Verwendung der Innengriffe (50) nicht geöffnet werden können;
- erste Auswahlmittel (90), die durch einen Anwender betätigt werden, um die normale Betriebsart und die Sicherungsbetriebsart zu wählen;
- eine Vorrichtung zum vorübergehenden Zustimmen, um die Sicherungsverriegelungsbetriebsart vorübergehend zu deaktivieren, falls sie vorher gewählt worden ist;
- zweite Auswahlmittel (95), die durch einen Anwender betätigt werden, um die Vorrichtung zum vorübergehenden Zustimmen für eine vorgegebene Zeit (Tmax) zu aktivieren;
und **dadurch gekennzeichnet, dass** sie außerdem umfasst:
- Detektionsmittel (185, 205), die während des Schrittes des vorübergehenden Deaktivierens der Sicherungsverriegelungsbetriebsart aktivierbar sind und um einen weiteren Betrieb der zweiten Auswahlmittel (95) zu bestimmen, um der zentralen Steuereinheit (75) zu befehlen, den Schritt vor Ablauf der vorgegebenen Zeit (Tmax) zu beenden (110; 190).

4. Steuervorrichtung nach Anspruch 3, die ferner Sensormittel (155, 165, 210) umfasst, um zu bestimmen, ob wenigstens eine der Türen (20) während des Schrittes des vorübergehenden Deaktivierens der Sicherungsverriegelungsbetriebsart geöffnet wird; wobei die Sensormittel (155, 165, 210) das Schließen (165) der Tür (20) bestimmen, um der zentralen Steuereinheit (75) zu befehlen, den Schritt zu beenden (170), wenn das Schließen bestimmt wird.

## Revendications

1. Procédé d'activation et de désactivation de la fonction de verrouillage de sécurité enfants de portes de véhicules (20), comprenant l'étape de détermination d'un ordre (90) de l'utilisateur pour sélectionner un mode de fonctionnement normal ou un mode de verrouillage de sécurité ;
- dans un mode de fonctionnement normal, un dispositif de verrouillage de sécurité étant réglé dans une première position de fonctionnement permettant d'ouvrir les portes (20) aussi bien à l'aide de poignées intérieures (50) qu'à l'aide de poignées extérieures (60), et
- dans un mode de verrouillage de sécurité, ledit dispositif de verrouillage de sécurité étant réglé dans une seconde position de fonctionnement, dans laquelle lesdites portes (20) ne peuvent seulement être ouvertes qu'à l'aide des poignées extérieures (60) ;
le procédé comprenant en outre l'étape de détermination d'un ordre supplémentaire (95; 130; 185; 205) de l'utilisateur pour exécuter une étape d'autorisation temporaire, dans laquelle le mode de verrouillage de sécurité actuel est basculé sur le mode de fonctionnement normal,
dans lequel ladite étape d'autorisation temporaire comprend l'étape de détermination du laps de temps s'écoulant à partir du nouvel ordre de l'utilisateur, de manière à interrompre (175; 200) ladite étape d'autorisation temporaire en réponse à l'expiration d'un temps prédéterminé (Tmax), le procédé étant **caractérisé par** l'étape de détermination, pendant ladite étape d'autorisation temporaire, d'un nouvel ordre de l'utilisateur pour interrompre en avance (110, 190) ladite étape d'autorisation temporaire.

2. Procédé tel que revendiqué dans la revendication 1, et comprenant en outre les étapes de :
- détermination (155) si au moins une porte (20) est ouverte pendant ladite étape d'autorisation temporaire ;
- détermination (165) de la fermeture de ladite porte (20) ; et
- interruption (170) de ladite étape d'autorisation temporaire en réponse à la détermination de ladite fermeture.

3. Dispositif de commande (70) destiné à activer et désactiver la fonction de verrouillage de sécurité enfants de portes (20) d'un véhicule, ledit dispositif de commande (70) comprenant :
- un dispositif de verrouillage de sécurité pouvant être relié à des poignées intérieures respectives (50) desdites portes (20) ;
- une unité centrale de commande (75) destinée à commander ledit dispositif de verrouillage de sécurité et à établir :
un mode de fonctionnement normal, dans lequel ledit dispositif de verrouillage de sécurité est réglé dans une première position de fonctionnement permettant d'ouvrir lesdites portes (20) aussi bien à l'aide desdites poignées intérieures (50) qu'à l'aide des poignées extérieures correspondantes (60) ; et
un mode de verrouillage de sécurité, dans lequel ledit dispositif de verrouillage de sécurité est réglé dans une seconde position de fonctionnement dans laquelle lesdites portes (20) ne peuvent pas être ouvertes à l'aide desdites poignées intérieures (50) ;
- des premiers moyens de sélection (90) manoeuvrés par un utilisateur pour sélectionner un mode de fonctionnement normal et un mode de verrouillage de sécurité ;
- un dispositif d'autorisation temporaire destiné à désactiver temporairement ledit mode de verrouillage de sécurité s'il a été sélectionné antérieurement ;
- des seconds moyens de sélection (95) manoeuvrés par un utilisateur pour activer ledit dispositif d'autorisation temporaire pendant un temps prédéterminé (Tmax) ;
et étant **caractérisé en ce qu'**il comprend aussi :
- des moyens de détection (185, 205) pouvant être activés pendant l'étape de désactivation temporaire du mode de verrouillage de sécurité, et destinés à déterminer une nouvelle manoeuvre desdits seconds moyens de sélection (95) de manière à ordonner à ladite unité de commande centrale (75) d'interrompre en avance (110; 190) ladite étape par rapport au temps prédéterminé (Tmax).

4. Dispositif de commande tel que revendiqué dans la revendication 3 et comprenant des moyens de détection (155, 165, 210) pour déterminer si au moins une desdites portes (20) est ouverte pendant l'étape de désactivation temporaire du mode de verrouillage de sécurité; lesdits moyens de détection (155, 165, 210) déterminant la fermeture (165) de ladite porte (20) pour ordonner à ladite unité centrale de commande (75) d'interrompre (170) ladite étape, en réponse à la détermination de ladite fermeture.
